Europäisches Patentamt

**European Patent Office**

Office européen des brevets

(11) Veröffentlichungsnummer : **0 130 233**
**B1**

(12) **EUROPÄISCHE PATENTSCHRIFT**

(45) Veröffentlichungstag der Patentschrift :
**25.03.87**

(21) Anmeldenummer : **83108512.1**

(22) Anmeldetag : **30.08.83**

(51) Int. Cl.⁴ : **F 16 K 11/20**

(54) **Mischventil mit Zeiteinstellglied.**

(30) Priorität : **08.06.83 DE 8317032 U**
**08.07.83 DE 3325178**

(43) Veröffentlichungstag der Anmeldung :
**09.01.85 Patentblatt 85/02**

(45) Bekanntmachung des Hinweises auf die Patenterteilung : **25.03.87 Patentblatt 87/13**

(84) Benannte Vertragsstaaten :
**AT BE CH DE FR GB IT LI LU NL SE**

(56) Entgegenhaltungen :
**AT-B- 216 717**
**DE-C- 2 543 112**
**US-A- 2 988 110**

(73) Patentinhaber : **AQUA BUTZKE-WERKE AKTIENGE-**
**SELLSCHAFT**
**Ritterstrasse 21-27**
**D-1000 Berlin 61 (DE)**

(72) Erfinder : **Denkena, Karl-Heinz, Dipl.-Ing.**
**Kalksteinweg 52**
**D-1000 Berlin 47 (DE)**
Erfinder : **Kretschmer, Joachim, Dipl.-Ing.**
**Schopenhauer Strasse 93a**
**D-1000 Berlin 38 (DE)**

(74) Vertreter : **Meinig, Karl-Heinz, Dipl.-Phys.**
**PATENTANWÄLTE PFENNING MEINIG & PARTNER**
**Kurfürstendamm 170**
**D-1000 Berlin 15 (DE)**

Jouve, 18, rue St-Denis. 75001 Paris. France

**Beschreibung**

Die Erfindung betrifft ein Mischventil mit Zeiteinstellglied für sanitäre Anlagen oder dergleichen nach dem Oberbegriff des Hauptanspruchs.

Aus der DE-C-2 543 112 ist ein Mischventil mit Zeiteinstellglied bekannt, bei dem das über zwei getrennte Zulaufanschlüsse zugeführte kalte und heiße Wasser in einem Mischraum gemischt werden. Weiterhin ist ein Selbstschlußventil vorgesehen, das über ein in dem Mischgriff eingelassenen Druckknopf betätigbar ist, wobei nach Betätigung das in der Mischkammer anstehende Wasser über ein Ventil in den Auslauf gelangt. Ohne weitere Betätigung des Druckknopfes schließt das Selbstschlußventil selbsttätig nach einer bestimmten Zeit und damit nach dem Durchfluß einer bestimmten Wassermenge. Derartige Mischventile werden als Brausearmatur oder Standauslauf für Waschtische und Waschreihen oder auch für Spülzwecke verwendet. Dabei weisen sie den Vorteil auf, daß sie aufgrund der Vorgabe bestimmter Wassermengen wasser- und energiesparend sind und daß ein Schließen des Mischventils von Hand nach erfolgter Wasserentnahme entfällt.

Da die bekannten Mischventile für unterschiedliche Anwendungszwecke, wie Wasch-, Brause- und Spülvorgänge, verwendet werden, sind jeweils auch unterschiedliche Wassermengen bzw. unterschiedliche Zeiten der Wasserabgabe notwendig. Außerdem können sich die Laufzeiten infolge hydraulischer Einflüsse verändern, so daß eine Nachregulierung notwendig wird.

Bei dem bekannten Mischventil ist zwar schon eine Reguliervorrichtung vorgesehen, sie wird aber vor der Installation eingestellt und verbleibt üblicherweise in dem einmal eingestellten Zustand. Diese Reguliereinrichtung ist innerhalb des Mischventils angeordnet, so daß bei einer Änderung der Zeit- bzw. Wassermengeneinstellung das Mischventil ganz oder teilweise demontiert werden muß, so daß der übliche Benutzer solcher Armaturen die Einstellung nur dann durchführen kann, wenn er über besondere Fachkenntnisse oder besondere Werkzeuge verfügt.

Hier setzt die vorliegende Erfindung ein, der die Aufgabe zugrunde liegt, ein Mischventil mit Zeiteinstellglied zu schaffen, bei dem in einfacher Weise und ohne großen Zeitaufwand, Werkzeuge und besondere Kenntnisse eine Einstellung der Wassermenge bzw. der Laufzeit durch den Benutzer möglich ist.

Diese Aufgabe wird erfindungsgemäß durch die kennzeichnenden Merkmale des Hauptanspruchs in Verbindung mit den Merkmalen des Oberbegriffs gelöst. Dadurch, daß die Regulierschraube von außen zugänglich ist, ist durch Drehen der Schrauben ein einfaches Verschieben der Reguliernadel und damit ein einfaches Einstellen der Wassermenge möglich, wobei durch Vorsehen einer Dichtung zwischen Reguliernadel und Gegendruckkammer eine Absperrung des Wassers nicht notwendig ist.

Durch die in den Unteransprüchen angegebenen Maßnahmen sind vorteilhafte Weiterbildungen und Verbesserungen möglich.

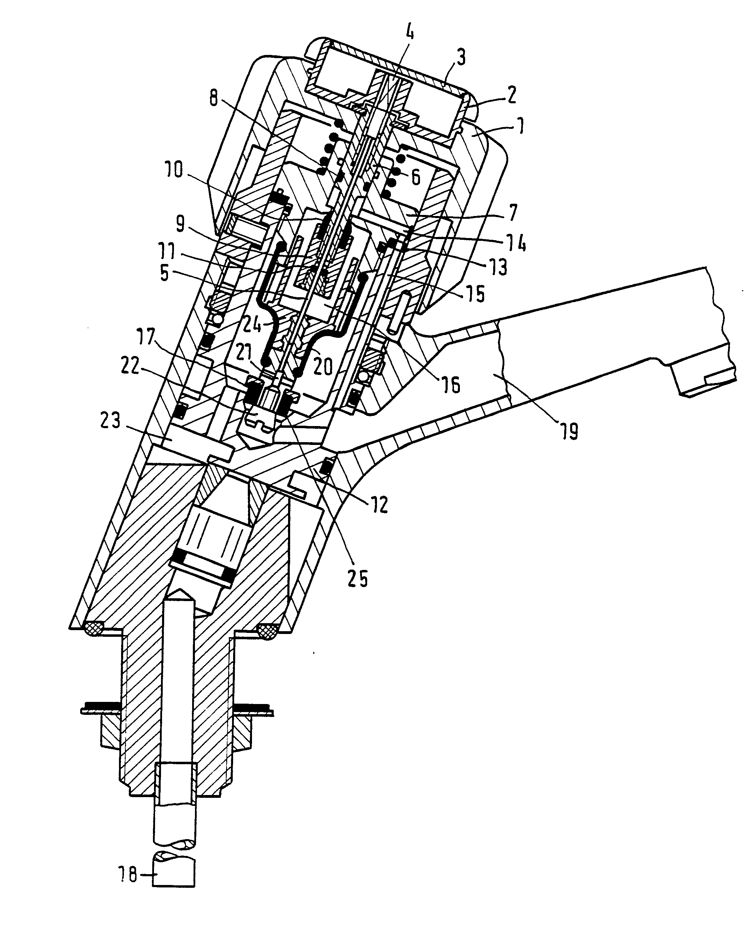

Die Erfindung ist in der Zeichnung dargestellt und wird in der nachfolgenden Beschreibung näher erläutert. Die einzige Figur zeigt einen Schnitt durch eine Ausführungsform der Erfindung am Beispiel einer Waschtisch-Mischbatterie.

Das Mischventil weist in bekannter Weise Zulaufanschlüsse für kaltes und heißes Wasser auf, wobei in der Figur nur ein Zulaufanschluß 18 gezeigt ist. Die Anschlüsse 18 gehen in einen Mischraum 23 über, in dem kaltes und warmes Wasser abhängig von der Stellung des Druckdrehgriffes 1 und damit abhängig von der Stellung der Steuerkartusche 12 gemischt wird. In dem oberen Teil des Mischventils ist das als Selbstschlußventil ausgebildete Zeiteinstellglied aufgenommen. Dabei weist das Selbstschlußventil ein Kopfstück 7 mit einer konzentrischen Bohrung auf, durch die ein Griff-Führungsteil 6 hindurchgeführt ist, wobei das Griff-Führungsteil 6 drehgesichert im Kopfstück gelagert ist und über einen O-Ring 8 abgedichtet ist. Das Griff-Führungsteil 6 ist an seinem dem Druckdrehgriff 1 zugewandten Ende mit einer Gewindebohrung versehen, in die eine Einstellschraube 4 eingeschraubt ist, die wiederum fest mit einer Reguliernadel 5 verbunden ist. Die Einstellschraube 4 weist einen Vierkant auf, der formschlüssig in einem Mitnehmerschlitz eines Drehgriffes 2 steckt. Dieser Drehgriff 2 ist in den Druckdrehgriff 1 axial formschlüssig aber drehbar eingelassen.

Auf das andere Ende des Griff-Führungsteils 6 ist eine Hilfsventilbuchse 9 mit Hilfsventildichtung 10 aufgeschraubt. Innerhalb der Hilfsventilbuchse 9 ist die Reguliernadel 5 über einen O-Ring 11 abgedichtet. Der Hub der Hilfsventildichtung 10 und entsprechend der Hub des Drehgriffes 1 gegen die Kraft einer Druckfeder ist über die Schraubverbindung der Hilfsventilbuchse 9 auf das Griff-Führungsteil 6 veränderbar, wobei üblicherweise die Hilfsventilbuchse 9 in der Weise aufgeschraubt ist, daß eine Hubbewegung von ungefähr 2 mm des Druckdrehgriffs 1 möglich ist.

Die in jedem Selbstschlußventil vorgesehene Gegendruckkammer 16 wird von einem Gummikörper 20 umschlossen und von dem übrigen Druckraum des Fließmediums abgedichtet, der einerseits an dem Kopfstück 7, das in die Steuerkartusche 12 mit der Dichtung 13 eingeschraubt ist und andererseite an dem Ventilkörper 24 des Hauptventils befestigt ist. In dem Ventilkörper 24 ist eine Bohrung 21 vorgesehen, über die die Verbindung zum Innenraum der Gegendruckkammer 16 gegeben ist, wobei die Reguliernadel 5 durch die Gegendruckkammer 16 hindurch und in der Bohrung 21 unter Bildung eines kleinen Ringraums mit der Wandung der Bohrung 21 geführt ist. Am unteren Ende des Ventilkörpers 24 sind eine Hauptventildichtung 17 und eine Ventilschraube 22 angeordnet. Die Hauptventildichtung 17 bildet mit dem in der Steuerkartusche 12 vorgesehenen Ventilsitz 25 das Hauptventil, über das die Verbindung des Zulaufs 18 und der Mischkammer 23 zu dem Auslauf 19 unterbrochen werden kann. Die Gegendruckkammer 16 steht bei geöffneter Hilfsventildichtung 16 über die Abflußkanäle 14 und 15 mit dem Auslauf 19 in Verbindung.

Die Figur zeigt das Mischventil mit Zeiteinstellglied in geschlossener Stellung, wobei die Hauptventildichtung 17 auf dem in der Steuerkartusche 12 eingeformten Sitz 25 aufliegt, so daß das Wasser vom Armatureneingang 18 nicht zum Auslauf 19 strömen kann. In Schließstellung steht innerhalb der Gegendruckkammer 16 der gleiche Druck wie in der Mischkammer 23, so daß sich der Gummikörper 20 im Gleichgewichtszustand befindet. Nach Drücken der Betätigung des Drehdruckgriffs 1 gegen die Wirkung der Rückholfeder bewegt sich das Griff-Führungsteil 6 und die Hilfsventilbuchse 9 nach unten, so daß die Hilfsventildichtung 10 öffnet und das Wasser der Gegendruckkammer 16 über die Kanäle 14 und 15 zum Auslauf 19 abfließen kann. Der Wasserdruck stülpt den Gummikörper 20 ein, so daß die Hauptventildichtung 17 von ihrem Sitz 25 abhebt und der Wasserfluß von den Zuflüssen 18 über die Mischkammer 23 zum Auslauf 19 einsetzt. Durch die Reguliernadel 5 wird der Hub des Ventilkörpers 24 mit dem Gummikörper 20 und der Hauptventildichtung 17 begrenzt. Die Anschlagstellung wird erreicht, wenn die Ventilschraube 22 an das Ende der Reguliernadel 5 anschlägt. Dieser Anschlag der Reguliernadel 5 ist über die Einstellschraube 4 und den Drehgriff 2 in seiner Höhe verstellbar, so daß dadurch die gewünschten Hubhöhen der am Ventilkörper 24 befestigten Hauptventildichtung 17 und damit die gewünschte Wassermenge veränderbar ist.

Nach Ende der Betätigung schließt die Hilfsventildichtung 10 wieder, so daß sich die Gegendruckkammer 16 über die Bohrung 21 und dem Ringraum zwischen der Bohrung 21 und Reguliernadel 5 allmählich wieder auffüllt. Durch den in der Gegendruckkammer 16 sich aufbauenden Druck wird die Hauptventildichtung 17 langsam wieder auf den Sitz 25 bewegt, so daß nach Aufsetzen das Mischventil schließt.

Die abgegebene Wassermenge bzw. die Zeit der Wasserabgabe ist von der Wiederauffüllzeit der Gegendruckkammer 16, das heißt von dem verdrängten Volumen aus der Gegendruckkammer 16 abhängig, wobei dieses wieder abhängig von der Hubbewegung des Ventilkörpers 24 und der Hauptventildichtung 17 ist. Da die Hubbewegung durch den Anschlag, den die Reguliernadel 5 der Ventilschraube 22 entgegensetzt, gegeben ist, kann die Zeit der Wasserabgabe bzw. die Wassermenge durch Höhenverstellung der Reguliernadel 5 eingestellt werden. Diese Höhenverstellung erfolgt durch Drehung am Drehgriff, der den Vierkant der Einstellschraube 4 mitnimmt, so daß über das Bewegungsgewinde im Griff-Führungsteil 6 die Reguliernadel 5 entsprechend der Drehrichtung am Griff 2 nach oben oder unten gestellt werden kann.

In den Drehgriff 2 ist eine Abdeckplatte 3 zum Beispiel über eine Schnappverbindung eingelassen, die mit einem die Bedienbarkeit verdeutlichenden Piktogrammaufdruck versehen ist und auf der die eingestellte Wassermenge bzw. die eingestellte Zeit angezeigt wird.

Das Ausführungsbeispiel wurde anhand einer Waschtisch-Mischbatterie beschrieben. Selbstverständlich umfaßt die Erfindung alle selbstschließenden Armaturen für die Anwendungsbereiche Waschen, Brausen und Spülen.

Die oben beschriebene einfache Verstellung der Höhe der Reguliernadel 12 über den Drehgriff 2 ohne Absperrung des Wassers ist nur dadurch möglich, daß die Reguliernadel 5 mit dem O-Ring 11 gegenüber der Gegendruckkammer 16 abgedichtet ist.

Die Endstellung der Regulierschraube 4 und damit die Endstellung der Reguliernadel 5 wird derart gewählt, daß die Hauptventildichtung 17 auch bei Betätigung des Druckdrehgriffes 1 nicht abheben kann. Dadurch können Wartungsarbeiten durchgeführt werden, ohne daß die Notwendigkeit der Abstellung des Wassers besteht.

**Patentansprüche**

1. Mischventil mit Zeiteinstellglied für sanitäre Anlagen oder dergleichen mit mindestens zwei getrennten Zulaufanschlüssen (18) und einem Auslauf (19) für das vermischte Fließmedium, wobei über einen Druckdrehgriff (1) die Querschnitte der Zulaufanschlüsse (18) steuerbar sind und wobei das Zeiteinstellglied als Selbstschlußventil ausgebildet ist, das eine sich über ein Hilfsventil (9, 10) entleerbare Gegendruckkammer (16) und ein über die Gegendruckkammer betätigbares Hauptventil (17, 25) enthält und wobei eine mit einer Regulierschraube (4) verbundene in der Höhe verstellbare Reguliernadel (5) den Hub des Hauptventils einstellt, dadurch gekennzeichnet, daß die Regulierschraube (4) von außen zugänglich ist, daß eine Dichtung (11) zum Abdichten der Reguliernadel (5) gegen die Gegendruckkammer (16) vorgesehen ist, und daß in den Druckdrehgriff (1) ein weiterer unabhängig betätigbarer Drehgriff (2) eingelassen ist, mit dem die die Höhe der Reguliernadel (5) verstellbare Regulierschraube (4) formschlüssig verbunden ist.

2. Mischventil nach Anspruch 1, dadurch gekennzeichnet, daß in den Drehgriff (2) eine Zeit und/oder Wassermengenanzeigeeinrichtung (3) eingelassen ist.

3. Mischventil nach Anspruch 2, dadurch gekennzeichnet, daß die die Zeit- und/oder Wassermengenanzeigeeinrichtung eine in den Drehgriff (2) eingesetzte Abdeckplatte (3) aufweist.

4. Mischventil nach einem Ansprüche 1 bis 3, dadurch gekennzeichnet, daß die durch die Regulierschraube (4) verstellbare Reguliernadel (5) eine Endstellung aufweist, die das Hauptventil (17, 25) unabhängig von der Betätigung in ständig geschlossenem Zustand hält.

**Claims**

1. Mixing valve with time setting unit for sanitary installations or the like with at least two separate supply connections (18) and one outlet (19) for the mixed flow medium, the cross-sections of the supply connections (18) being controllable by means of a pressure rotary grip (1), the time setting unit being constructed as a self-acting closing valve, which contains a counterpressure chamber (16) emptiable by means of an auxiliary valve (9, 10) and a main valve (17, 25) operable by means of the counterpressure chamber, the travel of the main valve being regulated by a vertically adjustable regulating needle (5) connected to a regulating screw (4), characterized in that the regulating screw (4) is accessible from the outside, that there is a seal (11) for sealing regulating needle (5) against counterpressure chamber (16) and that in the pressure rotary grip (1) is engaged a further independently operable rotary grip (2) to which is positively connected the regulating screw (4) which adjusts the height of the regulating needle (5).

2. Mixing valve according to claim 1, characterized in that a time and/or water quantity indicator (3) is engaged in rotary grip (2).

3. Mixing valve according to claim 2, characterized in that the time and/or water quantity indicator has a cover plate (3) inserted in rotary grip (2).

4. Mixing valve according to one of the claims 1 to 3, characterized in that the regulating needle (5) adjustable by regulating screw (4) has an end position which keeps the main valve (17, 25) in a permanently closed state independently of the operation.

**Revendications**

1. Robinet mélangeur à temporisateur pour des appareils sanitaires ou analogues, comportant au moins deux raccords d'arrivée (18) et un orifice de sortie (19) pour le fluide mélangé ; un bouton-poussoir tournant (1), pour faire varier les sections utiles des raccords d'arrivée (18), et un système de temporisation pour assurer la fermeture automatique du robinet ; ce système de temporisation comportant une chambre de contre-pression (16), dont l'évacuation est commandée par un clapet auxiliaire (9, 10), un obturateur principal (17, 25) actionné par la chambre de contre-pression (16), et une aiguille de réglage (5) reliée à une vis de réglage (4), dont on peut faire varier la position axiale pour régler la course de soulèvement de l'obturateur principal (17, 25) ; le robinet étant caractérisé en ce que la vis de réglage (4) est accessible de l'extérieur, en ce qu'un joint (11) est prévu pour assurer le montage étanche de l'aiguille de réglage (5) par rapport à la chambre de contre-pression (16), et en ce qu'un autre bouton tournant (2), qui peut être actionné indépendamment, est encastré dans le bouton-poussoir tournant (1), et pourvu d'un logement dans lequel s'emboîte la vis de réglage (4) qui sert à faire varier la position axiale de l'aiguille de réglage (5).

2. Robinet mélangeur selon la revendication 1, caractérisé en ce que le bouton-poussoir (2) porte un système d'indication de la durée de débit du robinet ou de la quantité d'eau débitée par celui-ci à chaque manœuvre.

3. Robinet mélangeur selon la revendication 2, caractérisé en ce que le système d'indication de la durée d'ouverture du robinet ou de la quantité d'eau débitée par celui-ci comporte un couvercle (3) monté dans le bouton tournant (2).

4. Robinet mélangeur selon l'une des revendications 1 à 3, caractérisé en ce que l'aiguille de réglage (5), commandée par l'intermédiaire de la vis de réglage (4), comporte une position extrême assurant en permanence le maintien de l'obturateur principal (17, 25) en position de fermeture, quelle que soit la position de l'organe d'actionnement du robinet.